# FASCICULE DE BREVET EUROPEEN

(11) **EP 2 181 899 B1**
(45) Date de publication et mention de la délivrance du brevet: **08.08.2012**
(21) Numéro de dépôt: 09306046.5
(22) Date de dépôt: 02.11.2009
(51) Int. Cl.: B60R 22/22, B62D 25/20

(54) **Dispositif de fixation d'une ceinture de sécurité et plancher de véhicule automobile équipé d'un tel dispositif**
Befestigungsvorrichtung für einen Sicherheitsgurt, und Bodengruppe eines Kraftfahrzeugs, welche mit einer solchen Vorrichtung ausgestattet ist.
Seatbelt attachment device and vehicle floor equipped with such a device.

(30) Priorité: 03.11.2008 FR 0857469; 03.11.2008 FR 0857467
(43) Date de publication de la demande: 05.05.2010
(73) Titulaire: Peugeot Citroën Automobiles SA, 78140 Vélizy-Villacoublay (FR)
(72) Inventeur: Desplanches, Patrice, 78100, Saint Germain En Laye (FR); Didier, Vincent, 28210, Villemeux-Sur-Eure (FR)
(74) Mandataire: Callu Danseux, Violaine

(56) Documents cités:
- DE-A1- 4 239 470
- DE-A1-102006 007 383
- US-A- 4 911 493
- US-A1- 2008 231 078

## Description

La présente invention concerne un dispositif de fixation d'une ceinture de sécurité permettant la liaison entre l'attache et l'enrouleur de la ceinture de sécurité et la caisse d'un véhicule automobile.

L'invention concerne également un plancher de la caisse d'un véhicule automobile comportant un tel dispositif de fixation.

L'invention concerne plus particulièrement la fixation des ceintures de sécurité pour les passagers situés à l'arrière du véhicule.

La plupart du temps les attaches des ceintures de sécurité et les enrouleurs de celles-ci sont fixés sur un passage de roue arrière ou sur la doublure d'une aile arrière.

Les documents FR 2 532 852, US 5 018 780 et EP 1 839 966 décrivent différentes solutions pour fixer à la caisse d'un véhicule les ceintures de sécurité destinés aux passagers des sièges arrières du véhicule.

En plus, le document DE 10 2006 007383 A1 décrit un dispositif de fixation d'une ceinture de sécurité permettant la liaison entre l'attache et l'enrouleur de la ceinture de sécurité et la caisse d'un véhicule automobile, ledit dispositif comprenant en outre une traverse en tôle emboutie et un support en tôle comportant une partie située dans un plan perpendiculaire à l'axe de la traverse comportant des moyens pour fixer l'attache et l'enrouleur de la ceinture de sécurité.

Lors d'un accident, la liaison entre la ceinture de sécurité et le passage de roue ou la doublure d'aile subit des efforts importants.

Ainsi, ces passages de roue ou doublures d'aile sont spécifiquement conçus lors du développement du véhicule pour pouvoir supporter les efforts ci-dessus.

Dans certains véhicules notamment dans le cas des grands monospaces il existe à l'arrière de la seconde rangée de sièges une place qui est en principe suffisante pour recevoir une troisième rangée de sièges.

Cependant, ces véhicules n'ont pas toujours été conçus à l'origine ni pour permettre l'implantation de cette rangée supplémentaire de sièges, ni pour permettre la fixation des ceintures de sécurité pour les passagers de ces sièges.

Ainsi, lorsqu'une troisième rangée de sièges est rajoutée au cours du développement du véhicule, les passages de roue ou les doublures d'aile doivent être redimensionnés afin de satisfaire aux contraintes de choc, ce qui implique de modifier lourdement les outillages déjà conçus.

Le but de la présente invention est de créer un dispositif de fixation permettant d'obtenir une liaison entre l'attache et l'enrouleur d'une ceinture de sécurité et la caisse d'un véhicule qui permet de supporter les efforts ci-dessus, notamment dans le cas où la caisse du véhicule n'a pas été conçue pour assurer une telle liaison.

Ce but est atteint selon l'invention, grâce à un dispositif de fixation d'une ceinture de sécurité permettant la liaison entre l'attache et l'enrouleur de la ceinture de sécurité et la caisse d'un véhicule automobile, comprenant une traverse en tôle emboutie dont les deux bords longitudinaux sont adaptés pour pouvoir être soudés directement sur le plancher du véhicule et un support en tôle soudé à l'une des extrémités de la traverse comportant une première partie située dans un plan perpendiculaire à l'axe de la traverse comportant des moyens pour fixer l'attache et l'enrouleur de la ceinture de sécurité et une seconde partie pliée à angle droit par rapport à la première partie s'étendant sous ladite extrémité de la traverse, l'un des bords de cette seconde partie étant adapté pour être soudé sur le plancher du véhicule.

Lorsque le dispositif de fixation est soudé au plancher du véhicule, en cas de choc, la ceinture de sécurité transmet au support fixé à la traverse des efforts qui tendent à soulever l'extrémité de la traverse à laquelle est relié le support.

Cependant, le dispositif de fixation résiste à ces efforts grâce aux soudures qui relient la traverse et le support au plancher et aux soudures qui relient le support à l'extrémité de la traverse.

De préférence, la traverse a une section transversale sensiblement en U, lesdits deux bords longitudinaux étant constitués chacun par une bordure pliée vers l'extérieur à l'extrémité d'une aile du U.

Cette structure confère à la traverse une excellente résistance aux efforts tout en étant relativement légère.

De préférence, ladite extrémité de la traverse comporte de chaque côté un flanc replié à angle droit vers l'extérieur qui est soudé à ladite première partie du support.

On obtient ainsi une liaison entre le support et l'extrémité de la traverse qui présente une excellente résistance aux efforts exercés par la ceinture de sécurité en cas de choc du véhicule.

Dans une version préférée de l'invention, la seconde partie du support déborde de part et d'autre de la traverse, le bord de cette seconde partie opposé à ladite première partie étant sensiblement perpendiculaire à l'axe de la traverse.

Ce débordement permet de répartir les efforts sur une grande surface de contact entre le dispositif de fixation selon l'invention et le plancher.

Selon d'autres particularités de l'invention :
- la seconde partie du support déborde de part et d'autre de la traverse suivant des longueurs inégales.
- le point de fixation de ladite attache de ceinture de sécurité sur ladite première partie du support est situé au-dessus de l'extrémité de la traverse, le point de fixation de l'enrouleur est décalé de celui de l'attache et est situé en regard de la partie de ladite seconde partie du support qui déborde le plus par rapport à la traverse.
- le support est formé d'une seule pièce.
- le support comprend, en outre, des moyens de fixation d'un dispositif de cache-bagages, lorsque ledit dispositif est dans sa position de rangement.
- les moyens de fixation du dispositif de cache-bagages sont formés par un orifice de forme conique, dont la partie la plus évasée est orientée vers l'intérieur du coffre du véhicule, l'orifice étant destiné à recevoir une extrémité d'un enrouleur rigide dudit dispositif.
- le support comprend, en outre, des moyens de fixation d'une barre de seuil.
- le support comprend, en outre, des moyens de fixation d'un crochet d'arrimage.

Selon un autre aspect, l'invention concerne également un plancher de la caisse d'un véhicule automobile comportant un dispositif de fixation d'une ceinture de sécurité selon l'invention, ce dispositif étant soudé directement sur la partie arrière du plancher, de telle sorte que ladite seconde partie du support s'étende sensiblement au-dessus d'un longeron.

Ainsi, la seconde partie du support est reliée à une partie du plancher qui présente une excellente résistance aux efforts du fait de la proximité du longeron.

De préférence, ledit bord de ladite seconde partie du support est soudé au plancher suivant au moins une ligne de soudure sensiblement parallèle audit longeron, le reste de ladite seconde partie du support situé à l'extérieur de cette ligne de soudure, reposant librement sur le plancher.

Toute la partie de cette seconde partie du support ne peut en effet pas être soudée au plancher du fait de la présence du longeron qui constitue un obstacle pour réaliser d'autres soudures que la ligne de soudure précitée.

Néanmoins, l'ensemble constitué par le support et la traverse résiste aux efforts grâce à cette unique ligne de soudure et aux autres liaisons existant entre le support et l'extrémité de la traverse et les soudures entre celle-ci et le plancher.

De préférence, lesdites première et seconde parties du support débordent par rapport à la face latérale arrière de la traverse de telle sorte que l'extrémité arrière de ces première et seconde parties est située près du bord arrière du plancher.

Cette disposition permet de répartir les efforts exercés sur le support sur une longueur relativement grande du plancher.

Dans une application préférée de l'invention, ledit plancher est adapté pour recevoir une troisième rangée de sièges, la traverse comportant des moyens pour fixer et supporter cette troisième rangée de sièges.

Ainsi, la traverse du dispositif de fixation selon l'invention présente une fonction supplémentaire de support pour la troisième rangée de siège.

D'autres particularités et avantages de l'invention apparaîtront encore tout au long de la description ci-après. Aux dessins annexés, donnés à titre d'exemples, non limitatifs :
- la Figure 1 est une vue en perspective montrant la partie arrière d'un plancher d'un véhicule automobile équipé d'un dispositif de fixation d'une ceinture de sécurité selon l'invention ;
- la Figure 2 est une vue en perspective mettant en évidence la fixation d'un support, appartenant au dispositif de fixation, sur le plancher ;
- la Figure 3 est une vue en perspective du support, mettant en évidence ses différentes interfaces de fixation ; et
- la Figure 4 est une vue en détail montrant l'extrémité du support recevant un dispositif de cache bagages et une barre de seuil.

Afin de simplifier la description qui va suivre, les Figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

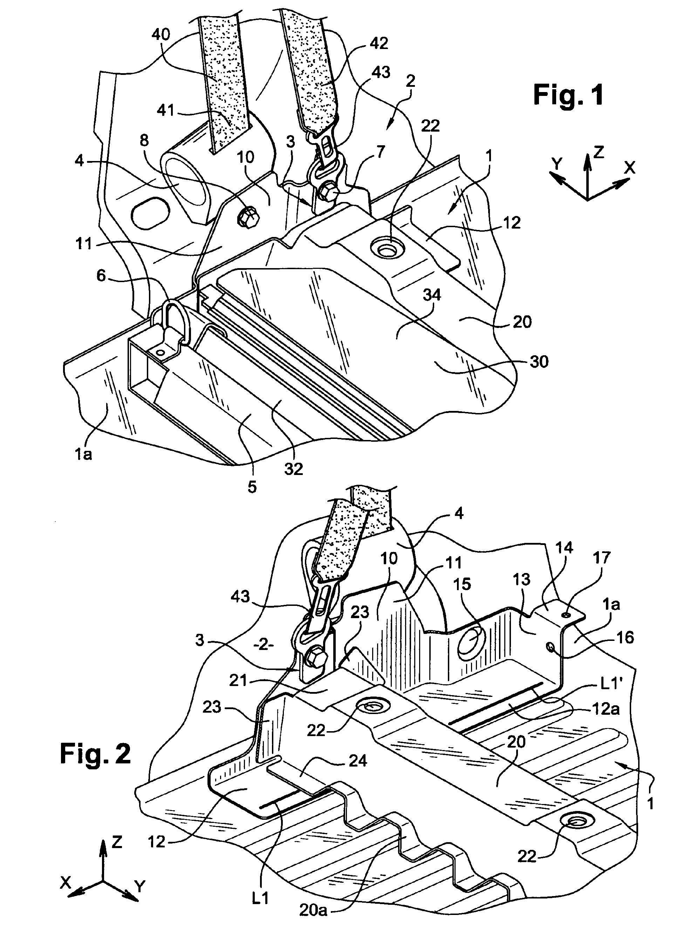

La figure 1 montre l'arrière ouvert d'un véhicule automobile qui comporte un plancher 1 limité latéralement par une tôle 2 d'un passage de roue.

Sous le plancher 1 s'étend de chaque côté un longeron, non représenté.

Le véhicule automobile représenté possède au-dessus du plancher 1 une place suffisante pour recevoir une troisième rangée de sièges, non représentée, toutefois, ce véhicule n'a pas été conçu à l'origine pour supporter cette troisième rangée de sièges, ni pour fixer l'attache 3 de la ceinture de sécurité et l'enrouleur 4 de celle-ci.

A cet effet, le plancher 1 est équipé d'un dispositif de fixation de la ceinture de sécurité nécessaire pour assurer la sécurité des passagers d'une telle troisième rangée de sièges.

Classiquement, la ceinture de sécurité comprend une sangle 40, dont les extrémités 41 et 42 sont reliées à la structure du véhicule afin de supporter les efforts subis par la ceinture en cas de choc.

La première extrémité 41 est reliée à la structure par l'intermédiaire de son enrouleur 4 et la deuxième extrémité 42 est reliée à la structure par l'intermédiaire de son attache 3 avec laquelle coopère un crochet 43 disposé au bout de l'extrémité 42.

Le dispositif de fixation comprend une traverse 20 en tôle emboutie dont les deux bords longitudinaux 20a sont adaptés pour pouvoir être soudés directement sur le plancher 1 du véhicule et un support 10 en tôle soudé à une extrémité 21 de la traverse 20.

La traverse 20 s'étend sur sensiblement toute la largeur du plancher 1, elle est comprise entre le passage de roue 2 et l'autre passage de roue situé à l'extrémité opposée du plancher. Un support 10 est soudé à chaque extrémité 21 de la traverse 20, les supports étant identiques, un seul sera décrit ici.

Ce support 10 comporte une première partie 11, située dans un plan perpendiculaire à l'axe de la traverse 20, comportant des trous pour fixer respectivement l'attache 3 et l'enrouleur 4 de la ceinture de sécurité et une seconde partie 12 pliée à angle droit par rapport à la première partie 11 du support et s'étendant sous l'extrémité 21 de la traverse 20.

Le bord 12a de cette seconde partie 12 est adapté pour être soudé sur le plancher 1 du véhicule.

Dans l'exemple représenté sur la figure 2, la traverse 20 a une section transversale sensiblement en U.

Les deux bords longitudinaux 20a de la traverse 20 sont constitués chacun par une bordure pliée vers l'extérieur à l'extrémité d'une aile du U et sont conformés pour épouser les nervures du plancher 1.

L'extrémité 21 de la traverse 20 comporte de chaque côté un flanc 23 replié à angle droit vers l'extérieur qui est soudé à la première partie 11 du support 10.

Par ailleurs, un autre flanc 24 replié à angle droit de chaque côté de l'extrémité 21 de la traverse 20 est soudé sur la seconde partie 12 du support 10.

La figure 2 montre que la seconde partie 12 du support 10 déborde de part et d'autre de la traverse 20 et que le bord 12a de cette seconde partie 12 opposé à la première partie 11 du support est sensiblement perpendiculaire à l'axe de la traverse 20.

Ce bord 12a de la seconde partie 12 du support 10 est adapté pour être soudé au plancher 1 du véhicule suivant deux lignes de soudure L1, L1' situées respectivement de part et d'autre de la traverse 20.

La seconde partie 12 du support 10 déborde de part et d'autre de la traverse 20 suivant des longueurs inégales, de sorte que la ligne de soudure L1' située à l'arrière de la traverse 20 est plus longue que la ligne de soudure L1 située à l'avant.

La Figure 2 montre également que les première et seconde parties 11, 12 du support débordent par rapport à la face latérale arrière de la traverse 20 de telle sorte que l'extrémité arrière de ces première et seconde parties est située près du bord arrière 1 a du plancher. La partie du support 10 qui déborde vers l'avant de la traverse 20 est relativement courte.

Par ailleurs, le point de fixation de l'attache 3 de ceinture de sécurité sur la première partie 11 du support 10 est situé juste au-dessus de l'extrémité 21 de la traverse 20 et le point de fixation de l'enrouleur 4 est décalé de celui de l'attache 3 vers l'arrière du véhicule et est situé en regard de la partie de la seconde partie 12 du support 10 qui déborde le plus par rapport à la traverse 20.

On voit également sur la figure 2 que le dispositif de fixation selon l'invention est soudé directement sur la partie arrière du plancher 1, de telle sorte que la seconde partie 12 du support 10 s'étend sensiblement au-dessus du longeron.

Le bord 12a de la seconde partie 12 du support 10 est soudé au plancher suivant les deux lignes de soudure L1, L1' visibles sur la figure 2 qui sont parallèle au longeron.

Le reste de la seconde partie 12 du support 10 situé à l'extérieur de ces lignes de soudure L1, L1' repose librement sur le plancher 1, étant donné qu'aucune soudure n'est possible ailleurs que suivant ces lignes L1 et L1', car le longeron constitue un obstacle empêchant de telles soudures.

Comme montré par les figures 1 et 2, la première partie 11 du support 10 est située à proximité de la partie arrière du passage de roue 2.

Dans l'exemple représenté sur les figures, le plancher 1 a été adapté pour recevoir une troisième rangée de sièges. A cet effet, la traverse 20 comporte des trous taraudés 22 pour fixer et supporter l'armature de cette troisième rangée de sièges.

Le dispositif de fixation de la ceinture de sécurité que l'on vient de décrire présente les avantages ci-après.

Il est adaptable sur la partie arrière d'un plancher d'un véhicule, qui n'a pas été conçu à l'origine c'est-à-dire lors de son développement pour recevoir une troisième rangée de sièges, pour fixer l'attache et l'enrouleur d'une ceinture de sécurité.

Il résiste aux efforts exercés par la ceinture de sécurité en cas de choc du véhicule.

En effet, lors d'un choc du véhicule, la ceinture de sécurité applique un effort sur le support 10, qui a tendance à soulever l'extrémité de l'ensemble constitué par le support 10 et l'extrémité 21 de la traverse 20 par pivotement autour d'un axe passant par les lignes de soudure L1 et L1'.

L'assemblage par soudure des flancs 23 et 24 de la traverse 20 sur le support 10 permet de diffuser les efforts sur toute la longueur de la traverse 20 répartissant ainsi les efforts sur les liaisons par soudure L1, L1', correspondant à celles réalisées entre la seconde partie 12 du support 10 et le plancher 1 et à celles réalisées entre la traverse 20 et le plancher 1.

L'ensemble du dispositif ainsi assemblé évite le pivotement ci-dessus, en limitant les déformations et le déchirement de cet ensemble ainsi que la rupture des soudures L1 et L1'.

L'ensemble du dispositif ci-dessus est adaptable sur tout type de véhicule, notamment pour ceux dont la structure n'a pas été conçue pour recevoir une rangée supplémentaire de siège.

De plus, la traverse 20 du dispositif de fixation de la ceinture de sécurité sert également de support pour la fixation de cette rangée supplémentaire de sièges, ce qui rentabilise encore davantage la mise en oeuvre de la présente invention.

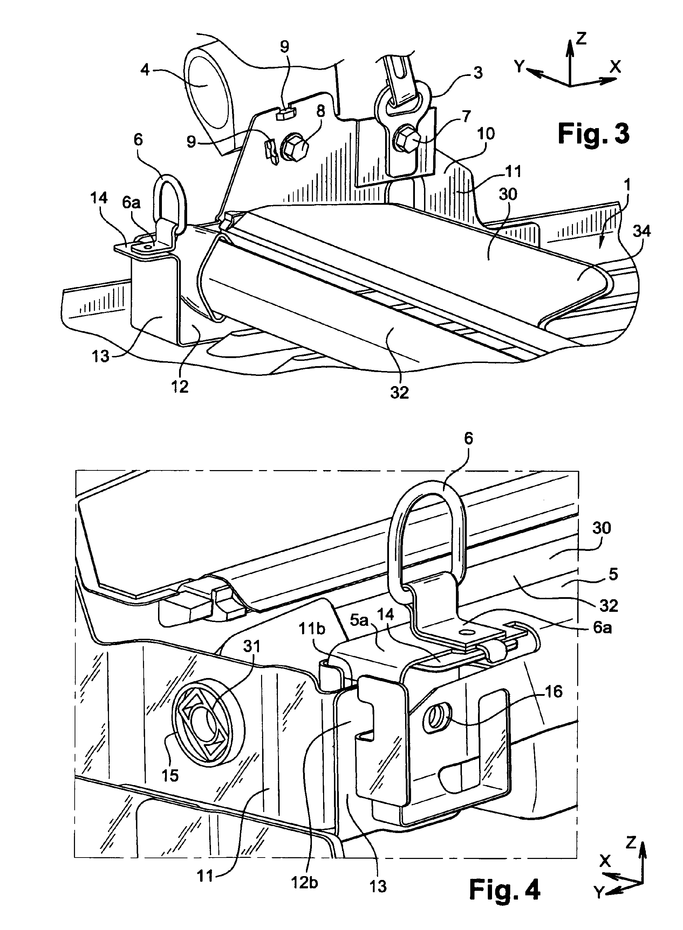

L'invention concerne également le support 10 appartenant au dispositif de fixation de la ceinture de sécurité. Le support 10 partiellement décrit ci-dessus comporte en outre, comme le montre la Figure 4, une troisième partie 13, s'étendant perpendiculairement aux première et seconde parties 11 et 12, formée :
- par une première aile 11 b appartenant à l'extrémité de la première partie 11 du support située près du bord arrière du plancher 1a, cette première aile 11 b est pliée à angle droit, en direction de l'intérieur du véhicule, par rapport à cette première partie 11 ; et
- par une deuxième aile 12b appartenant à l'extrémité de la seconde partie 12 du support située près du bord arrière du plancher 1a, cette deuxième aile 12b est pliée à angle droit, en direction du toit du véhicule, par rapport à cette seconde partie 12.

Ces deux ailes 11 b, 12b s'étendent sensiblement parallèlement à la traverse 20 et sont adjacentes l'une à l'autre, de telle façon qu'elles peuvent être soudées entre elles de façon former la troisième partie 13.

La deuxième aile 12b comprend, à son extrémité opposée au plancher 1, une patte 14 pliée à angle droit orientée vers l'arrière du véhicule.

Le support 10, décrit ci-dessus, est agencé par rapport à la traverse 20 et au plancher 1 pour résister aux efforts exercés par la ceinture de sécurité en cas de choc du véhicule.

Le support 10, dont les différentes interfaces de fixation vont être décrites plus en détail, est monobloc, et est obtenu à l'aide d'une technique classique d'emboutissage.

Selon l'invention, le support 10 est configuré de façon à permettre la fixation de l'attache 3 d'une ceinture de sécurité et de l'enrouleur 4 de celle-ci, d'un dispositif de cache bagages 30 lorsque ce dernier est dans sa position de rangement, d'une barre de seuil 5 et d'un crochet d'arrimage 6.

Ainsi, la première partie 11 comporte des trous pour fixer respectivement l'attache 3 et l'enrouleur 4 de la ceinture de sécurité, la fixation de ces éléments est assurée par des ensembles vis/écrou, respectivement 7 et 8. Comme le montre la Figure 3, la première partie 11 comporte également deux encoches 9 destinées à permettre le pré-maintien de l'enrouleur 4 avant sa fixation définitive. Ces deux encoches sont adjacentes au trou permettant la fixation de l'enrouleur 4.

L'extrémité de la première partie 11 disposée près du bord arrière du plancher 1a comporte un orifice 15 destiné à recevoir l'extrémité 31 d'un enrouleur appartenant au dispositif de cache bagages 30 lorsque ce dernier se trouve dans sa position de rangement.

Le dispositif de cache bagages 30 comprend, de façon classique, un enrouleur rigide 32 portant les extrémités 31, un rideau souple, non mis en évidence sur les Figures, et un rideau rigide 34. L'enrouleur 32 comprend un boitier de protection, dont la longueur correspond sensiblement à la largeur interne du véhicule, à l'intérieur duquel est placé un cylindre sur lequel s'enroule le rideau souple.

Lorsque la troisième rangée de sièges est retirée et que le dispositif 30 est en position montée sur le véhicule, le boitier est destiné à être fixé derrière la deuxième rangée de sièges afin de permettre le déploiement du rideau souple suivant la direction longitudinale du véhicule au dessus du compartiment de coffre. Le rideau rigide 34 permet alors d'assurer l'interface entre le rideau souple et le hayon du véhicule afin d'assurer une bonne couverture du contenu du coffre du véhicule.

Avant la mise en place dans le véhicule de la troisième rangée de sièges, le dispositif de cache bagages doit être ôté ; il peut alors avantageusement être rangé dans un logement prévu à cet effet au niveau du plancher 1 du coffre suivant la direction transversale du véhicule.

Lors de son rangement, chaque extrémité 31 de l'enrouleur rigide 32 est logée dans un orifice 15 appartenant à un support 10, disposé d'un côté du véhicule.

Afin d'assurer un bon positionnement de l'enrouleur rigide 32 sur le support 10, l'orifice 15, destiné à recevoir l'extrémité 31 de l'enrouleur rigide 32 est de forme conique, sa partie la plus évasée étant orientée vers l'intérieur du coffre du véhicule.

Comme le montre la Figure 4, la troisième partie 13 et la patte pliée 14 permettent la fixation de la barre de seuil 5, s'étendant sensiblement selon la direction transversale du véhicule, destinée à être disposée entre le plancher 1 et le garnissage du véhicule, non représenté. Chaque extrémité de la barre de seuil vient enserrée la troisième partie 13 et prendre appui sur la patte pliée 14.

Afin de permettre la fixation de la barre de seuil 5, la troisième partie 13 et la patte pliée 14 comportent des trous, respectivement 16 et 17, destinés à être placés en vis-à-vis de trous correspondants appartenant à la barre de seuil, la fixation est réalisée à l'aide d'ensembles vis/écrou, non représentés.

La patte pliée 14 permet également la fixation d'une patte 6a supportant le crochet d'arrimage 6 ; ce crochet permet l'accrochage de filet destiné à retenir les bagages ou autres objets devant être transportés dans le coffre du véhicule.

Plus particulièrement, la patte 6a supportant le crochet d'arrimage 6 peut être placée sur la face supérieure 5a de la barre de seuil 5 reposant sur la patte pliée 14. L'ensemble patte pliée 14/ face supérieure 5a de la barre de seuil/ patte 6a supportant le crochet d'arrimage 6 peut alors être maintenu à l'aide d'un seul ensemble vis/écrou traversant les différents orifices prévus à cet effet.

L'implantation du support 10 décrit ci-dessus est adaptable sur tout type de véhicule.

L'utilisation de ce support permet de limiter les étapes d'assemblage, ainsi le nombre de points de soudure et donc le nombre de moyens de ferrage peuvent être fortement diminués.

Le temps de cycle nécessaire pour assembler cette partie arrière du véhicule s'en trouve réduit, une seule pièce, le support, devant grâce à l'invention être fixée au plancher à la place de nombreuses autres pièces d'interface comme cela est connu de l'art antérieur.

De plus, le support de l'invention peut être embouti en « temps masqué » sans augmenter le temps de fabrication du véhicule.

## Revendications

1. Dispositif de fixation d'une ceinture de sécurité permettant la liaison entre l'attache (3) et l'enrouleur (4) de la ceinture de sécurité et la caisse d'un véhicule automobile, comprenant une traverse (20) en tôle emboutie dont les deux bords longitudinaux (20a) sont adaptés pour pouvoir être soudés directement sur le plancher (1) du véhicule et un support en tôle (10) soudé à l'une (21) des extrémités de la traverse (20) comportant une première partie (11) située dans un plan perpendiculaire à l'axe de la traverse (20) comportant des moyens pour fixer l'attache (3) et l'enrouleur (4) de la ceinture de sécurité et une seconde partie (12) pliée à angle droit par rapport à la première partie (11) s'étendant sous ladite extrémité (21) de la traverse (20), l'un (12a) des bords de cette seconde partie (12) étant adapté pour être soudé sur le plancher (1) du véhicule.

2. Dispositif selon la revendication 1, **caractérisé en ce que** la traverse (20) a une section transversale sensiblement en U, lesdits deux bords longitudinaux (20a) étant constitués chacun par une bordure pliée vers l'extérieur à l'extrémité d'une aile du U.

3. Dispositif selon l'une des revendications 1 ou 2, **caractérisé en ce que** ladite extrémité (20) de la traverse comporte de chaque côté un flanc (23) replié à angle droit vers l'extérieur qui est soudé à ladite première partie (11) du support (10).

4. Dispositif selon l'une des revendications 1 à 3, **caractérisé en ce que** la seconde partie (12) du support (10) déborde de part et d'autre de la traverse (20), le bord (12a) de cette seconde partie (12) opposé à ladite première partie (11) étant sensiblement perpendiculaire à l'axe de la traverse (20).

5. Dispositif selon la revendication 4, **caractérisé en ce que** la seconde partie (12) du support (10) déborde de part et d'autre de la traverse (20) suivant des longueurs inégales.

6. Dispositif selon la revendication 5, **caractérisé en ce que** le point de fixation de ladite attache (3) de ceinture de sécurité sur ladite première partie (11) du support (10) est situé au-dessus de l'extrémité (21) de la traverse (20), le point de fixation de l'enrouleur (4) est décalé de celui de l'attache (3) et est situé en regard de la partie de ladite seconde partie (12) du support (10) qui déborde le plus par rapport à la traverse (20).

7. Dispositif selon l'une quelconque des revendications précédentes, **caractérisé en ce que** le support est formé d'une seule pièce (10).

8. Dispositif selon l'une quelconque des revendications précédentes, **caractérisé en ce que** le support comprend, en outre, des moyens de fixation d'un dispositif de cache-bagages (30), lorsque ledit dispositif est dans sa position de rangement.

9. Dispositif selon la revendication 8, **caractérisé en ce que** les moyens de fixation du dispositif de cache-bagages (30) sont formés par un orifice (15) de forme conique, dont la partie la plus évasée est orientée vers l'intérieur du coffre du véhicule, l'orifice (15) étant destiné à recevoir une extrémité (31) d'un enrouleur rigide (32) dudit dispositif.

10. Dispositif selon l'une quelconque des revendications précédentes, **caractérisé en ce que** le support comprend, en outre, des moyens de fixation d'une barre de seuil (5).

11. Dispositif selon l'une quelconque des revendications précédentes, **caractérisé en ce que** le support comprend, en outre, des moyens de fixation d'un crochet d'arrimage (6).

12. Plancher de la caisse d'un véhicule automobile comportant un dispositif de fixation d'une ceinture de sécurité selon l'une des revendications 1 à 11, ce dispositif étant soudé directement sur la partie arrière du plancher (1), de telle sorte que ladite seconde partie (12) du support (10) s'étende sensiblement au-dessus d'un longeron.

13. Plancher selon la revendication 12, **caractérisé en ce que** ledit bord (12a) de ladite seconde partie (12) du support (10) est soudé au plancher (1) suivant au moins une ligne de soudure (L1, L1') sensiblement parallèle audit longeron, le reste de ladite seconde partie (12) du support situé à l'extérieur de cette ligne de soudure, reposant librement sur le plancher (1).

14. Plancher selon les revendications 12 ou 13, **caractérisé en ce que** lesdites première et seconde parties (11, 12) du support (10) débordent par rapport à la face latérale arrière de la traverse (20) de telle sorte que l'extrémité arrière de ces première et seconde parties est située près du bord arrière (1a) du plancher (1).

15. Plancher selon l'une des revendications 12 à 14, **caractérisé en ce que** ledit plancher (1) est adapté pour recevoir une troisième rangée de sièges, la traverse (20) comportant des moyens (22) pour fixer et supporter cette troisième rangée de sièges.

## Claims

1. Device for fixing a safety belt, enabling a connection between the fastener (3) and the reel (4) of the safety belt and the body of the motor vehicle, comprising a crossmember (20) made from pressed sheet metal, the two longitudinal edges (20a) of which are adapted to be able to be welded directly to the floor (1) of the vehicle, and a sheet-metal support (10) welded to one (21) of the ends of the crossmember (20) comprising a first part (11) situated in a plane perpendicular to the axis of the crossmember (20), comprising means for fixing the fastener (3) and the reel (4) of the safety belt and a second part (12) folded at a right angle with respect to the first part (11) extending under said end (21) of the crossmember (20), one (12a) of the edges of this second part (12) being adapted to be welded to the floor (1) of the vehicle.

2. Device according to claim 1, **characterised in that** the crossmember (20) has a transverse section substantially in a U shape, said two longitudinal edges (20a) each being formed by a border folded outwards at the end of a leg of the U.

3. Device according to one of claims 1 or 2, **characterised in that** said end (20) of the crossmember comprises on each side a flank (23) folded outwards at a right angle, which is welded to said first part (11) of the support (10).

4. Device according to one of claims 1 to 3, **characterised in that** the second part (12) of the support (10) projects on either side of the crossmember (20), the edge (12a) of this second part (12) opposite to said first part (11) being substantially perpendicular to the axis of the crossmember (20).

5. Device according to claim 4, **characterised in that** the second part (12) of the support (10) projects on either side of the crossmember (20) at unequal lengths.

6. Device according to claim 5, **characterised in that** the point where said safety-belt fastener (3) is fixed to said first part (11) of the support (10) is situated above the end (21) of the crossmember (20), and the fixing point of the reel (4) is offset from that of the fastener (3) and is situated opposite the part of the second part (12) of the support (10) that projects furthest with respect to the crossmember (20).

7. Device according to any one of the preceding claims, **characterised in that** the support is formed in a single piece (10).

8. Device according to any one of the preceding claims, **characterised in that** the support also comprises means of fixing a luggage-container device (30), when said device is in its storage position.

9. Device according to claim 8, **characterised in that** the means of fixing the luggage-container device (30) are formed by a conically shaped orifice (15), the most splayed part of which is oriented towards the inside of the vehicle boot, the orifice (15) being intended to receive an end (31) of a rigid reel (32) of the device.

10. Device according to any one of the preceding claims, **characterised in that** the support also comprises means of fixing a sill (5).

11. Device according to any one of the preceding claims, **characterised in that** the support also comprises means of fixing an anchoring hook (6).

12. Floor of the body of a motor vehicle, comprising a device for fixing a safety belt according to one of claims 1 to 11, this device being welded directly to the rear part of the floor (1), so that said second part (12) of the support (10) extends substantially above a longitudinal member.

13. Floor according to claim 12, **characterised in that** said edge (12a) of said second part (12) of the support (10) is welded to the floor (1) along at least one welding line (L1, L1') substantially parallel to said longitudinal member, the rest of said second part (12) of the support situated outside this welding line resting freely on the floor (1).

14. Floor according to claim 12 or 13, **characterised in that** said first and second parts (11, 12) of the support (10) project with respect to the rear lateral face of the crossmember (20) so that the rear end of these first and second parts is situated close to the rear edge (1 a) of the floor (1).

15. Floor according to one of claims 12 to 14, **characterised in that** said floor (1) is adapted to receive a third row of seats, the crossmember (20) comprising means (22) for fixing and supporting this third row of seats.

## Patentansprüche

1. Vorrichtung zum Befestigen eines Sicherheitsgurtes, die die Verbindung zwischen der Befestigungslasche (3) und dem Gurtaufroller (4) und der Karosserie eines Kraftfahrzeuges ermöglicht, umfassend einen Querträger (20) aus tiefgezogenem Blech, dessen beiden Längsenden (20a) geeignet sind, um direkt auf der Bodenplatte (1) des Fahrzeugs verschweißt zu werden, und eine Blechhalterung (10), die an einem (21) der Enden des Querträgers (20) verschweißt ist, umfassend einen ersten Abschnitt (11), der sich auf einer Ebene normal zur Querträgerachse (20) befindet, mit Vorrichtungen zum Befestigen der Befestigungslasche (3) und des Aufrollers (4) des Sicherheitsgurts, und einen zweiten Abschnitt (12), der im Verhältnis zum ersten Abschnitt (11) im rechten Winkel gebogen ist, und sich unterhalb des besagten Endes (21) des Querträgers (20) erstreckt, wobei einer (12a) der Ränder dieses zweiten Abschnitts (12) geeignet ist, um auf der Bodenplatte (1) des Fahrzeugs verschweißt zu werden.

2. Vorrichtung nach Anspruch 1, **dadurch gekennzeichnet, dass** der Querträger (20) einen in etwa U-förmigen Querschnitt aufweist, und die beiden besagten Längsenden (20a) jeweils durch einen nach außen gebogenen Rand am Ende eines Flügels des U gebildet werden.

3. Vorrichtung nach einem der Ansprüche 1 oder 2, **dadurch gekennzeichnet, dass** das besagte Ende (20) des Querträgers auf jeder Seite eine Flanke (23) umfasst, die im rechten Winkel nach außen gebogen, und auf dem besagten ersten Abschnitt (11) der Halterung (10) verschweißt ist.

4. Vorrichtung nach einem der Ansprüche 1 bis 3, **dadurch gekennzeichnet, dass** der zweite Abschnitt (12) der Halterung (10) beiderseits des Querträgers (20) übersteht, wobei der dem besagten ersten Abschnitt (11) gegenüber liegende Rand (12a) dieses zweiten Abschnitts (12) in etwa normal zur Querträgerachse (20) steht.

5. Vorrichtung nach Anspruch 4, **dadurch gekennzeichnet, dass** der zweite Abschnitt (12) der Halterung (10) beiderseits des Querträgers (20) in unterschiedlichen Längen übersteht.

6. Vorrichtung nach Anspruch 5, **dadurch gekennzeichnet, dass** sich der Befestigungspunkt der besagten Befestigungslasche (3) auf dem besagten ersten Abschnitt (11) der Halterung (10) über dem Ende (21) des Querträgers (20) befindet, der Befestigungspunkt des Aufrollers (4) versetzt zu jenem der Befestigungslasche (3), und gegenüber jenem Abschnitt des besagten zweiten Abschnittes (12) der Halterung (10) liegt, der im Verhältnis zum Querträger (20) weiter übersteht.

7. Vorrichtung nach irgendeinem der vorherigen Ansprüche, **dadurch gekennzeichnet, dass** die Halterung aus einem einzigen Teil (10) gebildet wird.

8. Vorrichtung nach irgendeinem der vorherigen Ansprüche, **dadurch gekennzeichnet, dass** die Halterung darüber hinaus Vorrichtungen zur Befestigung einer Gepäckabdeckungsvorrichtung (30) umfasst, wenn sich die besagte Vorrichtung in ihrer Verstaustellung befindet.

9. Vorrichtung nach Anspruch 8, **dadurch gekennzeichnet, dass** die Vorrichtungen zur Befestigung einer Gepäckabdeckungsvorrichtung (30) durch eine kegelige Bohrung (15) gebildet werden, deren größere Seite in Richtung Innenseite des Kofferraumes des Fahrzeuges gerichtet ist, und die Bohrung (15) dazu bestimmt ist, ein Ende (31) eines starren Aufrollers (32) der besagten Vorrichtung aufzunehmen.

10. Vorrichtung nach irgendeinem der vorherigen Ansprüche, **dadurch gekennzeichnet, dass** die Halterung darüber hinaus Vorrichtungen zur Befestigung einer Einstiegsleiste (5) umfasst.

11. Vorrichtung nach irgendeinem der vorherigen Ansprüche, **dadurch gekennzeichnet, dass** die Halterung darüber hinaus Vorrichtungen zur Befestigung eines Verzurrhakens (6) umfasst.

12. Bodenplatte der Karosserie eines Kraftfahrzeugs umfassend eine Vorrichtung zum Befestigen eines Sicherheitsgurtes nach einem der Ansprüche 1 bis 11, wobei diese Vorrichtung direkt auf dem hinteren Abschnitt der Bodenplatte (1) verschweißt ist, sodass sich der besagte zweite Abschnitt (12) der Halterung (10) in etwa über einen Längsträger erstreckt.

13. Bodenplatte nach Anspruch 12, **dadurch gekennzeichnet, dass** der besagte Rand (12a) des besagten zweiten Abschnitts (12) der Halterung (10) entlang zumindest einer Schweißbahn (L1, L1') auf der Bodenplatte (1) verschweißt ist, die in etwa parallel zum besagten Längsträger verläuft, wobei der Rest des besagten zweiten Abschnitts (12) der Halterung, der sich außerhalb dieser Schweißbahn befindet, frei auf der Bodenplatte (1) aufliegt.

14. Bodenplatte nach Anspruch 12 oder 13, **dadurch gekennzeichnet, dass** der besagte erste und zweite Abschnitt (11, 12) der Halterung (10) im Verhältnis zur hinteren Seitenfläche des Querträgers (20) überstehen, sodass das hintere Ende dieses ersten und zweiten Abschnitts nahe dem hinteren Rand (1 a) der Bodenplatte (1) liegt.

15. Bodenplatte nach einem der Ansprüche 12 bis 14, **dadurch gekennzeichnet, dass** die besagte Bodenplatte (1) geeignet ist, um eine dritte Sitzreihe aufnehmen zu können, wobei der Querträger (20) Vorrichtungen (22) zum Befestigen und Tragen dieser dritten Sitzreihe umfasst.
